(19) Europäisches Patentamt
European Patent Office
Office européen des brevets

(11) **EP 1 569 118 B1**

(12) **EUROPÄISCHE PATENTSCHRIFT**

(45) Veröffentlichungstag und Bekanntmachung des Hinweises auf die Patenterteilung:
**22.10.2008  Patentblatt 2008/43**

(51) Int Cl.:
***G06F 11/14*** *(2006.01)*

(21) Anmeldenummer: **05003129.3**

(22) Anmeldetag: **15.02.2005**

(54) **Verfahren zum sicheren Berechnen eines Ergebniswerts bei einem Mikroprozessorsystem**

Method for safe calculation of results in a microprocessor system

Méthode pour le calcul sécurisé de résultats dans une système à microprocesseurs

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **24.02.2004  DE 102004008901**

(43) Veröffentlichungstag der Anmeldung:
**31.08.2005  Patentblatt 2005/35**

(73) Patentinhaber: **Giesecke & Devrient GmbH**
**81677 München (DE)**

(72) Erfinder:
• **Wiren, Arvid**
**81927 München (DE)**
• **Seysen, Martin, Dr.**
**80809 München (DE)**
• **Bouabdallah, Nouredine**
**86159 Augsburg (DE)**

(74) Vertreter: **Klunker . Schmitt-Nilson . Hirsch**
**Winzererstrasse 106**
**80797 München (DE)**

(56) Entgegenhaltungen:
**EP-A- 1 122 909        EP-A- 1 271 317**
**WO-A-03/085881       GB-A- 2 293 469**
**US-A- 5 243 607        US-A1- 2001 037 448**

**Beschreibung**

Die Erfindung betrifft ein Verfahren zum sicheren Berechnen eines Ergebniswerts bei einem Mikroprozessorsystem, z.B. einer Speicheradresse in einem Speicherbereich des Mikroprozessorsystems, insbesondere bei DFA-Angriffen. Weiter betrifft die Erfindung einen Mikroprozessor mit dem darin implementierten Verfahren und einen Datenträger, insbesondere ein Chipmodul bzw. eine Chipkarte, mit einem solchen Mikroprozessor.

Mit der differentiellen Fehleranalyse (DFA, differential fault analysis) wurde ein Verfahren entwickelt, mit dem sich der geheime Schlüssel einer kryptographischen Berechnung ermitteln lässt. Bei der DFA wird auf einen Mikroprozessor, während dieser eine kryptographische Berechnung durchführt, ein DFA-Angriff vorgenommen, z.B. indem eine Spannungsspitze oder ein Lichtblitz an den Mikroprozessor angelegt wird. Der DFA-Angriff führt dazu, dass der Mikroprozessor Fehler bei der Berechnung macht. Aus diesen Fehlern kann der geheime Schlüssel ermittelt werden.

Nicht nur bei einer kryptographischen Berechnung wie z.B. in der Patentschrifft EP-A-1 122 909 beschrieben ist, sondern bei jeder beliebigen in einem Mikroprozessorsystem mit einem Mikroprozessor und ggf. weiteren Komponenten wie z.B. Speichern durchgeführten Rechenoperation, bei der ein Ergebniswert berechnet wird, kann ein DFA-Angriff dazu führen, dass der Mikroprozessor Fehler macht. Wird beispielsweise, während der Mikroprozessor eine Speicheradresse für einen Speicherzugriff berechnet, ein DFA-Angriff durchgeführt, kann es vorkommen, dass auf Grund des DFA-Angriffs eine falsche Speicheradresse berechnet wird und der Zugriff auf eigentlich gesperrte Speicherbereiche erzwungen wird.

Dokument EP-A-1 271 317 betrifft ein Betriebsystem, das bestimmte Funktionalitäten redundant durchführt, um eine Ausfallsicherheit zu gewährleisten. Dazu wird auf dem Prozessor eines Chips die gleiche Operation zwei- oder mehrfach durchgeführt. Die Ergebnisse der gleichartigen Programme werden verglichen und bei unterschiedlichen Ergebnissen wird eine Fehlerbehandlung durchgeführt.

Aufgabe der Erfindung ist es, ein Verfahren zu schaffen, mit dem sich ein Ergebniswert eines Mikroprozessorsystems, z.B. eine Speicheradresse in einem Speicherbereich, sicher, insbesondere sicher gegenüber DFA-Angriffen, berechnen lässt.

Die Aufgabe wird gelöst durch ein Verfahren nach dem unabhängigen Verfahrensanspruch und einen entsprechenden Datenträger. Vorteilhafte Ausgestaltungen der Erfindung sind in den abhängigen Ansprüchen angegeben.

Bei dem erfindungsgemäßen Verfahren zum sicheren Berechnen eines Ergebniswerts gemäß dem unabhängigen Anspruch 1 wird von einem Mikroprozessorsystem mit (zumindest) einem Mikroprozessor ausgegangen, mit dem ein Ergebniswert berechnet werden soll.

Dabei wird durch den Mikroprozessor eine erste Berechnung des Ergebniswerts durchgeführt, wobei ein erstes Rechenergebnis erzeugt wird. Zusätzlich wird durch den Mikroprozessor eine zweite, von der ersten Berechnung getrennte, Berechnung des Ergebniswerts durchgeführt wird, wobei ein zweites Rechenergebnis erzeugt wird. Das erste Rechenergebnis und das zweite Rechenergebnis werden miteinander verglichen. Falls das erste Rechenergebnis und das zweite Rechenergebnis nicht übereinstimmen, wird der berechnete Ergebniswert als fehlerhaft verworfen.

Die unterschiedlichen Rechenweisen sind gemäß einer Ausführungsform der Erfindung dadurch verwirklicht oder zumindest mit verwirklicht, dass das erste Rechenergebnis unter Verwendung eines ersten Parameters berechnet wird und das zweite Rechenergebnis unter Verwendung eines zweiten Parameters berechnet, wobei der erste und der zweite Parameter Komplementärwerte zueinander sind. Wahlweise fließen in jedes Rechenergebnis mehrere jeweils zueinander komplementäre Parameter ein.

Wird bei dem erfindungsgemäßen Verfahren ein Angriff, z.B. ein DFA-Angriff, auf den Mikroprozessor durchgeführt, so ist es sehr unwahrscheinlich, dass die erste Berechnung und die zweite Berechnung beide gleichermaßen verfälscht werden. Folglich führt ein Angriff, z.B. DFA-Angriff, dazu, dass das erste und das zweite Rechenergebnis nicht übereinstimmen, so dass der erfolgte Angriff erkannt wird.

Daher ist gemäß Anspruch 1 ein Verfahren geschaffen, mit dem sich ein Ergebniswert eines Mikroprozessorsystems sicher, insbesondere sicher gegenüber DFA-Angriffen, berechnen lässt.

Der Ergebniswert kann beispielsweise eine Speicheradresse in einem Speicher des Mikroprozessorsystems sein oder ein sicherheitsrelevanter Parameter des Mikroprozessorsystem, z.B. ein Zählerstand eines Zählers etc..

Die zweite Berechnung wird vorzugsweise derart durchgeführt, dass, falls die erste und die zweite Berechnung fehlerfrei ablaufen, das erste Rechenergebnis und das zweite Rechenergebnis übereinstimmen. Im Gutfall sollen also die beiden Rechenergebnisse übereinstimmen.

Bei Bedarf wird zumindest eines von dem ersten Rechenergebnis und dem zweiten Rechenergebnis unter Verwendung eines Korrekturwertes berechnet, der so gewählt ist, dass, falls die erste und die zweite Berechnung fehlerfrei ablaufen, das erste Rechenergebnis und das zweite Rechenergebnis übereinstimmen.

Gemäß einer bevorzugten Ausführungsform der Erfindung werden die erste Berechnung und die zweite Berechnung zeitlich versetzt zueinander durchgeführt. Auf diese Weise wird i.d.R. durch einen einzelnen Angriff auf den Mikroprozessor nur eines der beiden Rechenergebnisse gestört. Selbst wenn, wenn die beiden Berechnungen zeitlich teilweise überlappen, beide Berechnungen gestört werden, werden sie an unterschiedlichen Stellen im Rechenablauf gestört, so dass die Auswirkungen der Störung auf die beiden Rechenergebnisse für den Ergebniswert unterschiedlich sind. Das bevorzugte Verfahren ist somit noch besser dagegen geschützt, dass durch einen (DFA-) Angriff das erste und das zweite Rechenergebnis gleich verfälscht sind. Angriffe werden daher noch zuverlässiger erkannt.

Ein kombinierter Angriff, bei dem auf zwei zeitlich versetzte Berechnungen eines Ergebniswerts zwei gleichermaßen zeitlich versetzte Angriffe durchgeführt werden, wird unter Umständen bei der zuletzt genannten Ausführungsform nicht erkannt, da beide Berechnungen an der gleichen Stelle im Rechenablauf beeinflusst werden, so dass die beiden Rechenergebnisse, die mit den Berechnungen erzielt werden, identisch sein können.

Gemäß weiterer Ausführungsformen, die auch die angeführten kombinierten Angriffe erkennen können, werden alternativ oder zusätzlich zum zeitlichen Versatz die erste Berechnung und die zweite Berechnung auf zwei unterschiedliche Rechenweisen durchgeführt. Da die Rechenweisen unterschiedlich sind, ist auch die Auswirkung eines Angriffs auf die erste bzw. zweite Berechnung unterschiedlich. Daher ist selbst dann, wenn die erste und die zweite Berechnung gleichzeitig durchgeführt werden und gleichzeitig und gleichartig gestört werden und dadurch verfälscht werden, sichergestellt, dass das erste Rechenergebnis und das zweite Rechenergebnis unterschiedlich sind, so dass der kombinierte Angriff erkannt wird. Das Verfahren, bei dem zur Berechnung der beiden Rechenergebnisse unterschiedliche Rechenweisen eingesetzt werden, ist daher besonders sicher und zuverlässig.

Typischerweise werden bei der ersten und/ oder der zweiten Berechnung ein oder mehrere Rechenoperationen durchgeführt. Weiter werden typischerweise mehrere aufeinanderfolgende Rechenoperationen durchgeführt. Als Rechenoperation kann beispielsweise mindestens eine Subtraktion und/oder mindestens eine Addition durchgeführt werden. Falls eine oder mehrere der Rechenoperationen durch einen Angriff (z.B. DFA-Angriff, insbesondere Lichtangriff) erfolgreich gestört werden, wird das Rechenergebnis (z.B. eine Speicheradresse) verfälscht. Durch die erfindungsgemäße doppelte Berechnung des Rechenergebnisses, wahlweise zeitlich versetzt und/oder mit unterschiedlichen Rechenweisen, lässt sich die Verfälschung erkennen.

Gemäß einer weiteren Ausführungsform der Erfindung sind die unterschiedlichen Rechenweisen dadurch verwirklicht oder zumindest mit verwirklicht, dass das erste Rechenergebnis unter Verwendung mindestens einer ersten Variablen berechnet wird und das zweite Rechenergebnis unter Verwendung mindestens einer zweiten Variablen berechnet wird, wobei mindestens eine erste Variable und eine zweite Variable Komplementärwerte zueinander sind. Eine oder beide der Variablen können optional mit einem konstanten Wert multipliziert sein.

Bei Bedarf wird, um die Komplementärwertbildung bei dem Parameter und/oder bei der Variablen auszugleichen, bei einer der beiden Berechnungen, vorzugsweise bei der zweiten Berechnung, bei der der Komplementärwert verwendet wird, im Vergleich zur anderen (ersten) Berechnung eine weitere Komplementärwertbildung durchgeführt, bei der z.B. zu einem Zwischenergebnis zwischen dem Komplementärwert des Parameters bzw. der Variablen und dem zweiten Ergebniswert der Komplementärwert gebildet wird. Je nach Bedarf können auch mehrere weitere Komplementärwertbildungen durchgeführt werden.

Gemäß einer bevorzugten Ausführungsform ist der Komplementärwert der bitweise Komplementärwert des betreffenden Parameters bzw. der betreffenden Variablen. Wahlweise wird auch die Komplementärwertbildung, mit der die Komplementärwertbildung bei dem Parameter bzw. der Variablen ausgeglichen wird, als bitweise Komplementärwertbildung ausgeführt.

Die Parameter und/oder Variablen - und vorzugsweise auch die Rechenergebnisse - liegen vorzugsweise im binären Format vor, das an die Binärzahldarstellung eines Mikroprozessors angepasst ist. Die Bildung des Komplementärwerts durch bitweise Komplementärwertbildung wird wahlweise durch einen Komplementbildungs-Befehl durchgeführt, der (z.B.) beim Befehlssatz des Mikroprozessors vorgesehen ist.

Wahlweise wird, falls das erste und das zweite Rechenergebnis nicht übereinstimmen, das Rechenergebnis nicht nur als ungültig verworfen, sondern der Mikroprozessor geht in einen Fehlerzustand über oder wird in einen Fehlerzustand versetzt, in dem der Mikroprozessor nicht mehr betreibbar ist.

Vorzugsweise ist der Fehlerzustand höchstens anlässlich einer erfolgreichen Authentisierung gegenüber dem Mikroprozessor wieder aufhebbar. Mit anderen Worten ist der Fehlerzustand vorzugsweise absolut dauerhaft, d.h. nicht wieder aufhebbar, oder zumindest für einen Benutzer, der sich gegenüber dem Mikroprozessor nicht authentisieren kann, dauerhaft, also nicht wieder aufhebbar.

Im Folgenden wird die Erfindung anhand von Ausführungsbeispielen unter Bezugnahme auf die Zeichnung näher erläutert, in der zeigen:

Fig. 1    ein Flussdiagramm zur Veranschaulichung eines Verfahrens zur Berechnung einer Start-Speicheradresse E, ausgehend von einer Basis-Speicheradresse P, gemäß einer ersten Ausführungsform der Erfindung, bei der zwei unterschiedliche Rechenweisen eingesetzt werden;

Fig. 2    ein Flussdiagramm zu Veranschaulichung eines Verfahrens zur Berechnung einer Start-Speicheradresse E, ausgehend von einer Basis-Speicheradresse P, gemäß einer zweiten Ausführungsform der Erfindung, bei der zwei zeitversetzte Berechnungen eingesetzt werden.

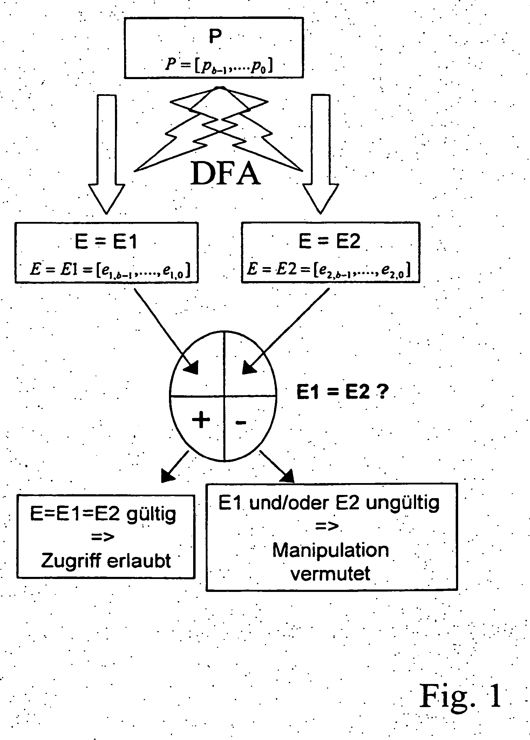

Gemäß einer ersten, in Fig. 1 veranschaulichten Ausführungsform der Erfindung soll in einer Chipkarte (Smart-Card) ausgehend von einer b Bit langen Basis-Speicheradresse $P = [p_{b-1},...., p_0]$ (Parameter P) eine b Bit lange Start-Speicheradresse $E = [e_{b-1},...., e_0]$ (Ergebniswert E) eines Speicherbereichs berechnet werden. Die Basis-Speicheradresse P kann beispielsweise der Beginn einer Speichereinheit (z.B. eines Blocks, Pakets etc.) sein, in der der Speicherbereich oder zumindest die Start-Speicheradresse E enthalten ist. Die Start-Speicheradresse E kann beispielsweise der Anfang eines Quell-Speicherbereichs sein, aus dem Daten ausgelesen werden sollen, beispielsweise um die Daten in einen Ziel-Speicherbereich zu kopieren. Alternativ kann die berechnete Start-Speicheradresse E beispielsweise der Anfang eines Ziel-Speicherbereichs sein, in den Daten kopiert werden sollen. Prinzipiell kann als E auch eine End-Speicheradresse eines Speicherbereichs berechnet werden.

Um aus der Basis-Speicheradresse P die Start-Speicheradresse E zu berechnen, führt ein Mikroprozessor der Chipkarte ein oder mehrere Rechenoperationen durch, in der Regel ein oder mehrere Additionen und/oder Subtraktionen. Im einfachsten Fall wird z.B., um E zu berechnen, zur Basis-Speicheradresse $P = [p_{b-1},...., p_0]$ ein offset $O = [o_{b-1}, ...., o_0]$ addiert oder von der Basis-Speicheradresse $P = [p_{b-1},...., p_0]$ ein Offset $O = [o_{b-1},....,o_0]$ subtrahiert. Der Mikroprozessor berechnet die Start-Speicheradresse E auf zwei unterschiedliche Rechenweisen, wobei für die Start-Speicheradresse E ein erstes Rechenergebnis $E1 = [e_{1,b-1},....,e_{1,0}]$ (z.B. E1 = P + O) und ein zweites Rechenergebnis $E2 = [e_{2,b-1},....,e_{2,0}]$ (z.B. E2 = ~(~P + ~O) + k, vgl. unten) berechnet werden. Würden keine Störungen erfolgen, wären E1 und E2 gleich. Während der Mikroprozessor die Berechnungen durchführt, um E1 und E2 zu berechnen, wird aber ein DFA-Angriff auf den Mikroprozessor durchgeführt, durch den beide Rechenergebnisse E1 und E2 verfälscht werden. Die beiden Rechenergebnisse E1 und E2 werden auf gegenseitige Übereinstimmung überprüft (E1 = E2 ?). Da E1 und E2 auf unterschiedliche Rechenweisen berechnet wurden, stimmen sie nicht überein (Symbol "-"). Folglich wird eine Manipulation vermutet und die Start-Speicheradresse E als ungültig verworfen. Würde der Vergleich von E1 und E2 ergeben, dass E1 und E2 gleich sind, so würde E1 = E2 = E als gültige Start-Speicheradresse E verwendet.

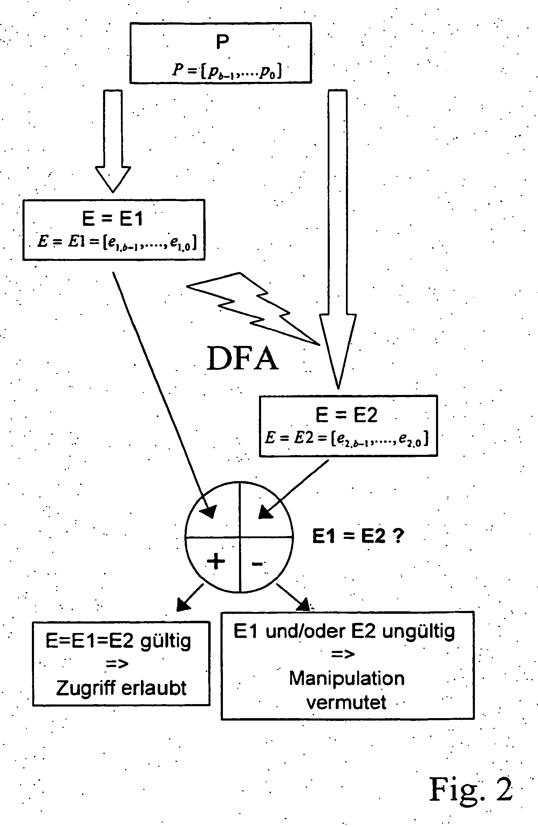

Fig. 2 veranschaulicht ein ähnliches Verfahren wie das in Fig. 1 veranschaulichte, gemäß einer zweiten Ausführungsform der Erfindung, bei der zwei zeitversetzte Berechnungen eingesetzt werden, um eine Start-Speicheradresse E zu berechnen. Durch eine erste, frühere Berechnung wird ein erstes Rechenergebnis E1 für die Start-Speicheradresse berechnet. Durch eine zweite, spätere Berechnung wird ein zweites Rechenergebnis E2 für die Start-Speicheradresse berechnet. Durch einen DFA-Angriff wird nur das zweite Rechenergebnis E2 beeinflusst, da die erste Berechnung zum Zeitpunkt des DFA-Angriffs bereits abgeschlossen ist. Hierdurch sind E1 und E2 unterschiedlich, und die berechnete Start-Speicheradresse wird verworfen.

Die Basis- und/oder Start-Speicheradressen P, E können beispielsweise acht Bit (ein Byte) lang sein, können aber auch länger oder kürzer als acht Bit sein. Die Ausführungsformen aus den Fig. 1 und 2 können auch miteinander kombiniert werden, wobei zwei zeitlich versetzte, auf unterschiedlichen Rechenweisen beruhende Berechnungen der Start-Speicheradresse E durchgeführt werden. Bei einem Mikroprozessorsystem mit nur einem einzigen Mikroprozessor werden die beiden Berechnungen in der Regel sequentiell und daher insbesondere zeitlich versetzt durchgeführt werden. Insbesondere bei einem Mikroprozessorsystem mit mehreren Mikroprozessoren können die unterschiedlichen Berechnungen auch synchron (zeitgleich) durchgeführt werden.

Wahlweise können auch mehr als zwei Berechnungen durchgeführt werden, wobei mehr als zwei Rechenergebnisse berechnet werden, die anschließend verglichen werden. Wahlweise können in jedes Rechenergebnis mehr als ein Parameter P und/oder mehr als eine Variable eingehen.

Der berechnete Ergebniswert E kann nicht nur eine Speicheradresse sein. Alternativ kann der Ergebniswert E ein beliebiges Rechenergebnis eines Mikroprozessors sein, beispielsweise ein Parameter in Bezug auf ein Mikroprozessorsystem, insbesondere ein sicherheitsrelevanter Parameter wie z.B. ein Zählerstand eines sicherheitsrelevanten Zählers oder dergleichen.

Im Folgenden werden weitere Ausführungsformen des Verfahrens angegeben, bei dem zwei Berechnungen eines Ergebniswerts auf zwei unterschiedliche Rechenweisen durchgeführt werden.

Die beiden Berechnungen erfolgen nach den beiden Seiten der Gleichung

$$(1) \quad \sum_{v=1}^{n} c_v * P_v = \sim \sum_{v=1}^{n} c_v * (\sim P_v) + k$$

wobei

$P_v$ - Parameter

$c_v$ - Vorzeichenparameter zur Bestimmung der Rechenoperation, wobei im einfachsten Fall gilt $c_v \in \{\pm 1\}$

$C_v = +1 \rightarrow$ Addition

$C_v = -1 \rightarrow$ Subtraktion

n -    Anzahl der Parameter

~ -    Bitweiser Komplementärwert eines betreffenden Werts

k -    Korrekturwert für den Vergleich der Rechenergebnisse

Ein erster Ergebniswert E1 wird gemäß der linken Seite von Gleichung (1) berechnet. Ein zweiter Ergebniswert E2 wird gemäß der rechten Seite von Gleichung (1) berechnet. Der erste Ergebniswert E1 (linke Seite von Glg (1)) wird durch eine Verknüpfung von n Parametern $P_v$, $v = 1...n$ durch Rechenoperationen berechnet, wobei die jeweilige Rechenoperation in Abhängigkeit vom Wert eines Vorzeichenparameters $c_v$ eine Addition ($c_v = +1$) oder eine Subtraktion ($c_v = -1$) ist. Der zweite Ergebniswert E2 (zweites Rechenergebnis, rechte Seite von Glg (1)) wird durch eine Verknüpfung von n Parametern $\sim P_v$, $v = 1...n$, wobei $\sim P_v$ jeweils der Komplementärwert zu $P_v$ ist, anschließende Komplementärwertbildung des Werts des Verknüpfungsergebnisses (umgangssprachlich teilweise auch: "Invertierung" des Verknüpfungsergebnisses), sowie Hinzufügung eines Korrekturwerts k berechnet, wobei der Korrekturwert k so gewählt ist, dass Gleichung (1) richtig ist, d.h. dass die beiden Berechnungen übereinstimmende Ergebniswerte (Rechenergebnisse) liefern, falls die beiden Berechnungen ungestört durchgeführt werden.

Im Folgenden wird ein Beispiel für ein Verfahren zur Berechnung eines Komplementärwerts $\sim P$ eines Parameters $P$ angegeben. Der Parameter $P$ liege im binären Zahlenformat vor, so dass er durch einen Mikroprozessor verarbeitbar ist, und habe eine Länge von b Bits.

Dann gilt

$$(2) \quad P + \sim P = 2^b - 1,$$

oder aufgelöst nach $\sim P$

$$(3) \quad \sim P = (2^b - 1) - P.$$

Unter Verwendung der Beziehung

$$(4) \quad 2^b - 1 = -1 (\bmod 2^b)$$

gilt für den Komplementärwert

$$(5) \quad \sim P = -1 - P (\bmod 2^b).$$

Die Gleichungen (2) - (5) werden im Folgenden an Hand eines konkreten Zahlenbeispiels veranschaulicht:

(Tabelle 1)

| Größe | Binär-Wert | Hex-Wert | Dez-Wert | Äquivalent |
|---|---|---|---|---|
| $P$ | 10010011 | 93 | 147 | |
| $+\sim P$ | + 01101100 | + 6C | + 108 | |
| = S | = 11111111 | = FF | = 255 | = -1(mod256) |

Die erste Zeile von Tabelle 1 gibt als Größe den Parameter $P$ an. Die zweite Zeile von Tabelle 1 gibt den Komplementärwert - $P$ von $P$ an. Die dritte Zeile von Tabelle 1 gibt die Summe S aus den Werten von $P$ und dem Komplementärwert $\sim P$ an. Die zweite, dritte bzw. vierte Spalte gibt den jeweiligen Wert im Binär-, Hexadezimal- bzw. Dezimalformat an. Wie aus der fünften Spalte ersichtlich ist, erfüllt das Zahlenbeispiel die Gleichung (5).

Aus den Gleichungen (5) und (1) lässt sich weiter der Korrekturwert $k$ ermitteln:

$$(6) \quad \sum_{v=1}^{n} c_v * P_v = -1 - \sum_{v=1}^{n} c_v * (-1 - P_v) + k$$

$$(7) \quad \sum_{v=1}^{n} c_v * P_v = -1 + \sum_{v=1}^{n} c_v + \sum_{v=1}^{n} c_v * P_v + k$$

$$(8) \quad 0 = -1 + \sum_{v=1}^{n} c_v + k$$

$$(9) \quad k = 1 - \sum_{v=1}^{n} c_v$$

Für die Spezialfälle $c_v \in \{\pm 1\}$ (Subtraktion und Addition) gilt, dass sich der Korrekturwert $k$ gemäß Gleichung (9) für jede Addition $(c_v = +1)$ um eins verringert und für jede Subtraktion $(c_v = -1)$ um eins erhöht. Für $|c_v| > 1$ ergeben sich betragsmäßig höhere Korrekturwerte.

Im Folgenden wird eine beispielhafte Berechnung des Korrekturwerts $k$ und der Ergebniswerte E1, E2 für eine Ausführungsform des Verfahrens durchgeführt, bei der zwei Ergebniswerte E1, E2 mit n gleich drei Parametern $P_v$ berechnet werden, wobei bei den beiden Berechnungen zueinander komplementäre Parameter verwendet werden.

Gemäß Gleichung (9) ist

$$k = 1 - \sum_{v=1}^{3} c_v$$

mit c1, c2, c3=+1 (2 Additionen von 3 positiven Werten)

$$k = 1 - 3 * (+1) \Rightarrow k = -2$$

Mit dem so berechneten Korrekturwert $k$ = -2 wird Gleichung (1) zu

$$(10) \quad P1 + P2 + P3 = \sim (\sim P1 + \sim P2 + \sim P3) - 2$$

Bei fehlerfreier Berechnung ist Gleichung (10) erfüllt, d.h. die linke und die rechte Seite von Gleichung (10) liefern den gleichen Wert für den Ergebniswert E1=E2=E. Falls Fehler auftreten, ist Gleichung (10) nicht mehr erfüllt.

Im Folgenden wird für beispielhafte Fehler die Erkennung des Fehlers ausgehend von der Nichterfüllung von Gleichung (10) dargelegt.

Im Gutfall, d.h. falls die beiden Berechnungen gemäß der linken und der rechten Seite von Gleichung (10) fehlerfrei durchgeführt werden, gilt:

$$E1 = P1 + P2 + P3$$

$$E2 + k = E2' = \sim (\sim P1 + \sim P2 + \sim P3) \qquad \text{mit } E2' := E2 + k$$

$$E1 - E2' = k = -2 \qquad \Rightarrow \text{Richtig.}$$

Bei einem ersten Fehler, der durch einen DFA-Angriff bewirkt ist, werde bei beiden Berechnungen die Addition von $P2$ weggelassen. Dann gilt:

$$E1 = P1 + P3$$

$$E2' = \sim (\sim P1 + \sim P3)$$

$$E2' = -1 - ((-1 - P1) + (-1 - P3))$$

$$E2' = -1 + 1 + P1 + 1 + P3$$

$$E2' = P1 + P3 + 1$$

$$E1 - E2' = -1 \,!= -2 \qquad \Rightarrow \text{Falsch.}$$

Bei einem zweiten Fehler, der durch einen DFA-Angriff bewirkt ist, werde bei beiden Berechnungen, d.h. bei der Berechnung beider Ergebniswerte E1, E2, statt $P2$ ein in beiden Berechnungen gleichermaßen verfälschter Parameter $P2f$ addiert. Dann gilt:

$$E1 = P1 + P2f + P3$$

$$E2' = \sim (\sim P1 + P2f + \sim P3)$$

$$E2' = -1 - ((-1 - P1) + P2f + (-1 - P3))$$

$$E2' = -1 + 1 + P1 - P2f + 1 + P3$$

$$E2' = P1 - P2f + P3 + 1$$

$$E1 - E2' = 2 * P2f - 1 != -2 \Rightarrow \text{Falsch}.$$

Bei den beiden obigen Beispielen wurden durch die doppelte Berechnung des Ergebniswerts mit zwei unterschiedlichen Rechenwegen (Rechenweisen) durch DFA-Angriffe verursachte Fehler erkannt, die bei anderen Verfahren unerkannt bleiben.

**Patentansprüche**

1. Verfahren zum sicheren Berechnen eines Ergebniswerts (E) bei einem Mikroprozessorsystem mit zumindest einem Mikroprozessor, wobei

   - eine erste Berechnung des Ergebniswerts (E) durchgeführt wird, wobei ein erstes Rechenergebnis (E1) erzeugt wird,
   - zumindest eine zweite Berechnung des Ergebniswerts (E) durchgeführt wird, wobei ein zweites Rechenergebnis (E2) erzeugt wird,
   - das erste Rechenergebnis (E1) und das zweite Rechenergebnis (E2) miteinander verglichen werden wobei die zweite Berechnung derart durchgeführt wird, dass, falls die erste und die zweite Berechnung fehlerfrei ablaufen, das erste Rechenergebnis (E1) und das zweite Rechenergebnis (E2) übereinstimmen und,
   - falls das erste und das zweite Rechenergebnis (E1, E2) nicht übereinstimmen, der berechnete Ergebniswert (E) als fehlerhaft verworfen wird;

   wobei das erste Rechenergebnis (E1) unter Verwendung mindestens eines ersten Parameters ($P_v$) berechnet wird und das zweite Rechenergebnis (E2) unter Verwendung mindestens eines zweiten Parameters ($\sim P_v$) berechnet wird, wobei mindestens ein erster Parameter ($P_v$) und ein zweiter Parameter ($\sim P_v$) Komplementärwerte zueinander sind, und wobei

$$E1 = \sum_{v=1}^{n} c_v * P_v \quad \text{und} \quad E2 = \sim \sum_{v=1}^{n} c_v * (\sim P_v) + k$$

   wobei

   $P_v$ - Parameter, der im binären Zahlenformat vorliegt, so dass er durch einen Mikroprozessor verarbeitbar ist, und der eine Länge von b Bits hat,
   $c_v$ - Vorzeichenparameter zur Bestimmung der Rechenoperation, wobei im einfachsten Fall gilt $c_v \in \{\pm 1\}$
   $c_v = +1 \rightarrow$ Addition
   $c_v = -1 \rightarrow$ Subtraktion
   n - Anzahl der Parameter
   $\sim$ - Bitweiser Komplementärwert eines betreffenden Werts
   k - Korrekturwert für den Vergleich der Rechenergebrisse, der so gewählt ist,

   dass, falls die erste und die zweite Berechnung fehlerfrei ablaufen, das erste Rechenergebnis (E1) und das zweite Rechenergebnis (E2) übereinstimmen.

2. Verfahren nach Anspruch 1, wobei die erste Berechnung und die zweite Berechnung zeitlich versetzt zueinander durchgeführt werden.

3. Verfahren nach einem der Ansprüche 1 bis 2, wobei der zweite Parameter ($\sim P_v$) der bitweise Komplementärwert des ersten Parameters ($P_v$) ist.

4. Verfahren nach einem der Ansprüche 1 bis 3, wobei das erste Rechenergebnis (E1) unter Verwendung mindestens einer ersten Variablen berechnet wird und das zweite Rechenergebnis (E2) unter Verwendung mindestens einer zweiten Variablen berechnet, wobei mindestens eine erste Variable und eine zweite Variable Komplementärwerte zueinander sind.

**5.** Verfahren nach einem der Ansprüche 1 bis 4, wobei die Berechnung eines von dem ersten Rechenergebnis (E1) und dem zweiten Rechenergebnis (E2) mindestens eine weitere Komplementärwertbildung umfasst, insbesondere mindestens eine Komplementärwertbildung, mit der ausgeglichen wird, dass der erste Parameter ($P_\nu$) und der zweite Parameter ($\sim P_\nu$) Komplementärwerte zueinander sind und/oder dass die erste Variable und die zweite Variable Komplementärwerte zueinander sind.

**6.** Verfahren nach einem der Ansprüche 1 bis 5, wobei bei der ersten und/oder der zweiten Berechnung mindestens eine Subtraktion und/oder mindestens eine Addition durchgerührt wird.

**7.** Verfahren nach einem der Ansprüche 1 bis 6, wobei der Ergebniswert (E) eine Speicheradresse in einem Speicher des Mikroprozessorsystems ist.

**8.** Verfahren nach einem der Ansprüche 1 bis 7, wobei der Ergebniswert (E) ein sicherheitsrelevanter Parameter des Mikroprozessorsystems ist.

**9.** Verfahren nach einem der Ansprüche 1 bis 8, wobei, falls das erste und das zweite Rechenergebnis (E1, E2) nicht übereinstimmen, der Mikroprozessor in einen Fehlerzustand übergeht oder versetzt wird, in dem der Mikroprozessor nicht mehr betreibbar ist.

**10.** Verfahren nach Anspruch 9, wobei der Fehlerzustand höchstens anlässlich einer erfolgreichen Authentisierung gegenüber dem Mikroprozessor wieder aufhebbar ist.

**11.** Mikroprozessor mit einem darin implementierten Verfahren nach einem der Ansprüche 1 bis 10.

**12.** Datenträger, insbesondere Chipkarte oder Chipmodul, mit einem darin eingerichteten Mikroprozessor nach Anspruch 11.


**Claims**

**1.** A method for securely computing a result value (E) in a microprocessor system with at least one microprocessor, wherein

- a first computation of the result value (E) is performed, whereby a first computational result (E1) is generated,
- at least a second computation of the result value (E) is performed, whereby a second computational result (E2) is generated,
- the first computational result (E1) and the second computational result (E2) are compared, whereby the second computation is performed such that if the first and second computations proceed without error, the first computational result (E1) and the second computational result (E2) match, and
- if the first and second computational results (E1, E2) do not match, the computed result value (E) is rejected as erroneous,
- whereby the first computational result (E1) is computed using at least a first parameter ($P_\nu$) and the second computational result (E2) is computed using at least a second parameter ($\sim P_\nu$), whereby at least a first parameter ($P_\nu$) and a second parameter ($\sim P_\nu$) are mutually complementary values, and whereby

$$E1 = \sum_{\nu=1}^{n} c_\nu * P_\nu \quad \text{et} \quad E2 = \sim \sum_{\nu=1}^{n} c_\nu * (\sim P_\nu) + k$$

where

$P_\nu$ - Parameter which is present in the binary number format so that it is processable by a microprocessor and which has a length of b bits

$c_\nu$ - Sign parameter for determining the arithmetic operation, whereby in the simplest case it holds that $C_\nu \in \{\pm 1\}$

$c_\nu = +1 \rightarrow$ addition

$c_\nu = -1 \rightarrow$ subtraction

n - Number of parameters

~ - Bitwise complementary value of a value in question

k - Correction value for the comparison of the computational results which is selected so that if the first and second computations proceed without error, the first computational result (E1) and the second computational result (E2) match.

2. The method according to claim 1, wherein the first computation and the second computation are performed with a time shift relative to each other.

3. The method according to either of claims 1 to 2, wherein the second parameter ($\sim P_v$) is the bitwise complementary value of the first parameter ($P_v$).

4. The method according to any of claims 1 to 3, wherein the first computational result (E1) is computed using at least a first variable and the second computational result (E2) is computed using at least a second variable, whereby at least a first variable and a second variable are mutually complementary values.

5. The method according to any of claims 1 to 4, wherein the computation of one of the first computational result (E1) and the second computational result (E2) comprises at least a further complementary value formation, in particular at least a complementary value formation which compensates that the first parameter ($P_v$) and the second parameter ($\sim P_v$) are mutually complementary values and/or that the first variable and the second variable are mutually complementary values.

6. The method according to any of claims 1 to 5, wherein at least one subtraction and/or at least one addition is performed in the first and/or the second computation.

7. The method according to any of claims 1 to 6, wherein the result value (E) is a memory address in a memory of the microprocessor system.

8. The method according to any of claims 1 to 7, wherein the result value (E) is a security-relevant parameter of the microprocessor system.

9. The method according to any of claims 1 to 8, wherein if the first and second computational results (E1, E2) do not match, the microprocessor goes or is put into an error state in which the microprocessor is no longer operable.

10. The method according to claim 9, wherein the error state is liftable at most upon a successful authentication vis-à-vis the microprocessor.

11. A microprocessor with a method according to any of claims 1 to 10 implemented therein.

12. A data carrier, in particular chip card or chip module, with a microprocessor according to claim 11 set up therein.

**Revendications**

1. Procédé destiné à un calcul fiable d'une valeur de résultat (E) dans un système à microprocesseur comprenant au moins un microprocesseur,

■ un premier calcul de la valeur de résultat (E) étant effectué, un premier résultat de calcul (E1) étant produit,
■ au moins un deuxième calcul de la valeur de résultat (E) étant effectué, un deuxième résultat de calcul (E2) étant produit,
■ le premier résultat de calcul (E1) et le deuxième résultat de calcul (E2) étant comparés entre eux, le deuxième calcul étant effectué de telle manière que, dans le cas où le premier calcul et le deuxième calcul se déroulent sans erreur, le premier résultat de calcul (E1) et le deuxième résultat de calcul (E2) concordent l'un avec l'autre et,
■ dans le cas où le premier et le deuxième résultat de calcul (E1, E2) ne concordent pas, la valeur de résultat (E) calculée est rejetée en tant qu'erronée,
■ le premier résultat de calcul (E1) étant calculé en utilisant au moins un premier paramètre ($P_v$) et le deuxième résultat de calcul (E2) étant calculé en utilisant au moins un deuxième paramètre ($\sim P_v$), au moins un premier paramètre ($P_v$) et un deuxième paramètre ($\sim P_v$) étant des valeurs complémentaires l'une par rapport à l'autre, et avec

$$E1 = \sum_{\nu=1}^{n} c_\nu * P_\nu \qquad \text{et} \qquad E2 =\sim \sum_{\nu=1}^{n} c_\nu * (\sim P_\nu) + k$$

avec

$P_\nu$ - paramètre, ayant un format nombre binaire, de telle manière qu'il puisse être traité par un microprocesseur, et ayant une longueur de b bits,

$c_\nu$ - paramètre de signe, étant destiné à déterminer l'opération de calcul, et en l'occurrence, dans le cas le plus simple, $c_\nu \in \{\pm 1\}$

$c_\nu$ = +1 $\rightarrow$ addition

$c_\nu$ = -1 $\rightarrow$ soustraction

n - nombre de paramètres

$\sim$ - valeur complémentaire bit par bit d'une valeur concernée

k $\sim$ valeur de correction pour la comparaison des résultats de calcul, cette valeur de correction étant sélectionnée de telle sorte que, dans le cas où le premier et le deuxième calcul (E1, E2) se déroulent sans erreur, le premier résultat de calcul (E1) et le deuxième résultat de calcul (E2) concordent l'un avec l'autre.

2. Procédé selon la revendication 1, le premier calcul et le deuxième calcul étant effectués à un moment différent l'un par rapport à l'autre.

3. Procédé selon une des revendications de 1 à 2, le deuxième paramètre ($\sim P_\nu$) étant la valeur complémentaire bit par bit du premier paramètre ($P_\nu$).

4. Procédé selon une des revendications de 1 à 3, le premier résultat de calcul (E1) étant calculé en utilisant au moins une première variable et le deuxième résultat de calcul (E2) étant calculé en utilisant au moins une deuxième variable, au moins une première variable et une deuxième variable étant des valeurs complémentaires l'une par rapport à l'autre.

5. Procédé selon une des revendications de 1 à 4, le calcul du premier résultat de calcul (E1) et du deuxième résultat de calcul (E2) comprenant au moins une autre constitution de valeur complémentaire, notamment au moins une constitution de valeur complémentaire par laquelle il est compensé que le premier paramètre ($P_\nu$ et le deuxième paramètre($\sim P_\nu$) sont des valeur complémentaires l'une par rapport à l'autre et/ou que la première variable et la deuxième variable sont des valeurs complémentaires l'une par rapport à l'autre.

6. Procédé selon une des revendications de 1 à 5, au moins une soustraction et/ou au moins une addition étant effectuée lors du premier et/ou lors du deuxième calcul.

7. Procédé selon une des revendications de 1 à 6, la valeur de résultat (E) étant une adresse mémoire dans une mémoire du système à microprocesseur.

8. Procédé selon une des revendications de 1 à 7, la valeur de résultat (E) étant un paramètre important pour la sécurité du système à microprocesseur.

9. Procédé selon une des revendications de 1 à 8, le microprocesseur passant ou étant mis, dans le cas où le premier et le deuxième résultat de calcul (E1, E2) ne concordent pas entre eux, à un état de défaut dans lequel le microprocesseur n'est plus exploitable.

10. Procédé selon la revendication 9, l'état de défaut n'étant annulable qu'au plus à l'occasion d'une authentification réussie vis-à-vis du microprocesseur.

11. Microprocesseur comportant un procédé implémenté selon une des revendications de 1 à 10.

12. Support de données, en particulier carte à puce ou module à puce, comportant un microprocesseur y étant installé selon la revendication 11.

P

$$P = [p_{b-1}, \ldots, p_0]$$

DFA

E = E1

$$E = E1 = [e_{1,b-1}, \ldots, e_{1,0}]$$

E = E2

$$E = E2 = [e_{2,b-1}, \ldots, e_{2,0}]$$

E1 = E2 ?

+   −

E=E1=E2 gültig
=>
Zugriff erlaubt

E1 und/oder E2 ungültig
=>
Manipulation
vermutet

Fig. 1

$$P$$
$$P = [p_{b-1}, \ldots, p_0]$$

$$E = E1$$
$$E = E1 = [e_{1,b-1}, \ldots, e_{1,0}]$$

DFA

$$E = E2$$
$$E = E2 = [e_{2,b-1}, \ldots, e_{2,0}]$$

E1 = E2 ?

$+$ $-$

E=E1=E2 gültig
=>
Zugriff erlaubt

E1 und/oder E2 ungültig
=>
Manipulation
vermutet

Fig. 2

**EP 1 569 118 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1122909 A

- EP 1271317 A